# EUROPEAN PATENT SPECIFICATION

(11) **EP 4 290 435 B1**
(45) Date of publication and mention of the grant of the patent: **16.07.2025**
(21) Application number: 22177398.9
(22) Date of filing: 06.06.2022
(51) Int. Cl.: G06Q 10/0631, G06Q 10/04

(54) **METHODS AND SYSTEMS FOR MANAGING ROBOTIC PROCESS AUTOMATION**
VERFAHREN UND SYSTEME ZUR VERWALTUNG VON ROBOTERPROZESSAUTOMATISIERUNG
PROCÉDÉS ET SYSTÈMES DE GESTION D'AUTOMATISATION DE PROCESSUS ROBOTIQUE

(43) Date of publication of application: 13.12.2023
(73) Proprietor: Blue Prism Limited, Warrington WA2 0XP (GB)
(72) Inventor: HADZIC, Tarik, Warrington, WA2 OXP (GB)
(74) Representative: Carpmaels & Ransford LLP

(56) References cited:
- US-A1- 2020 233 707
- US-A1- 2021 191 367
- US-A1- 2021 191 843
- US-A1- 2022 114 044

## Description

### Field of the Disclosure

The present disclosure relates to methods and systems for managing Robotics Process Automation (RPA) robot.

### Background

Robotics Process Automation (RPA) is an emerging form of business process automation technology utilising software robots or artificial intelligence (Al) workers. In conventional workflow automation tools, a software developer produces a list of actions to automate a task using internal application program interfaces. In contrast, RPA systems develop an action list by watching a user perform a task in the application's graphical user interface, and then perform the automation by repeating those tasks directly on the graphical user interface. RPA robots can then generate the appropriate input commands for the GUI to cause a given process to be carried out by the computer system. This enables the automation of processes, turning attended processes into unattended processes. The advantages of such an approach are multitude - these include greater scalability allowing multiple RPA robots to perform the same task across multiple computer systems, along with a greater repeatability as the possibility for human error in a given process is reduced or even eliminated.

Organisations that use RPA software such as software robots (also known as digital workers) have to ensure that the software is performing correctly during runtime. Errors that occur during execution have to be diagnosed and fixed as soon as possible. To achieve this, organisations typically employ staff to monitor performance and to detect and fix issues when they occur, which can add significant operating costs for running digital workers. By some industry-wide statistics, for every 20 digital workers a company needs to hire on average one full time employee to perform maintenance tasks.

Not only is the cost of manual maintenance high, the availably of the RPA-powered business processes can be significantly degraded if maintenance is not performed in a timely manner. Even if it is simple to diagnose and fix certain problems, it can take a lot of time to manually detect these problems, or to allocate a human worker to identify and fix them. For example, a 5-minute fix may happen only hours later when a human worker becomes available to assess and resolve the issue.

The disclosure of US2021/191843A1 provides a system and a computer-implemented method for analyzing workflow of test automation associated with a robotic process automation (RPA) application. The computer-implemented method includes receiving the workflow of the test automation associated with the RPA application and analyzing, via an Artificial Intelligence (AI) model associated with a workflow analyzer module, the workflow of the test automation based on a set of pre-defined test automation rules. The computer-implemented method further includes determining one or more metrics associated with the analyzed workflow of the test automation and generating, via the Al model, corrective activity data based on the determined one or more metrics.

### Summary

As mentioned above, there are a number of problems associated with currently available techniques for the maintenance of RPA-powered business processes, such as high operating costs and potential significant disruptions. This can mean that companies will get significantly diminished returns on investment from RPA or Intelligent Automation solutions due to the cost of maintenance required. This can also mean that companies may limit using business automation via software robots to only their less important business processes, which can substantially decrease the number of automatable processes and savings for customer organizations. Thus, it is a desired objective to reduce the RPA maintenance effort required by customer organisations and to increase reliability and availability of RPA-powered software robots.

Embodiments described herein are directed towards methods and systems for managing a Robotics Process Automation (RPA) robot. More specifically, embodiments described herein relate to techniques that can perform "self-healing" and reduce maintenance effort required for RPA robot(s), particularly by customer organisations and that can increase the reliability and/or availability of RPA robot(s).

According to an aspect of the present disclosure, there is provided a computer-implemented method for managing an RPA robot. The method comprises: acquiring data associated with an operation metric of the RPA robot during execution of an automation workflow; and determining an optimising action based on a policy and the acquired data associated with the operation metric of the RPA robot.

According to another aspect of the present disclosure, there is provided a system for managing performance of an RPA robot. The system comprises: an acquiring unit configured to acquire data associated with an operation metric of the RPA robot during execution of an automation workflow; and a determining unit configured to determine an optimising action based on the policy and the acquired data associated with the operation metric of the RPA robot.

According to another aspect of the present disclosure, there is provided a computer-readable storage medium comprising instructions which, when executed by a computer, cause the computer to carry out the steps of the method of as described herein.

Optional features are set out in the appended dependent claims.

These, and other aspects of the present disclosure will be better appreciated and understood when considered in conjunction with the following description and the accompanying drawings. The following description, while indicating various embodiments of the disclosure and numerous specific details thereof, is given by way of illustration and not of limitation. Many substitutions, modifications, additions, or rearrangements may be made within the scope of the disclosure, and the disclosure includes all such substitutions, modifications, additions or rearrangements.

### Brief Description of the Drawings

Embodiments of the present disclosure will now be described, by way of example only, with reference to the accompanying drawings, in which:
Figure 1 is a flowchart of a computer-implemented method for managing a Robotics Process Automation (RPA) robot, according to an embodiment of the present disclosure;
Figure 2 is a block diagram of a system for managing performance of an RPA robot, according to an embodiment of the present disclosure; and
Figure 3 is a diagram illustrating a topology for RPA robot management, according to an embodiment of the present disclosure.

### Detailed Description

In the following description, numerous specific details are set forth in order to provide a thorough understanding of the embodiments. It will be apparent, however, to one having ordinary skill in the art the specific details need not be employed to practice the embodiments. In other examples, well-known materials or methods have not been described in detail in order to avoid obscuring the present disclosure.

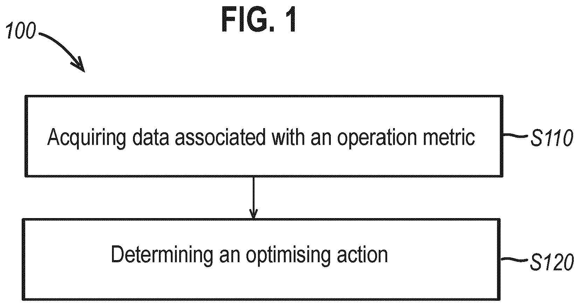

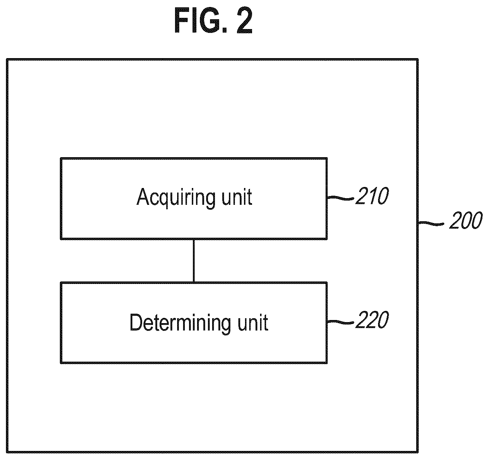

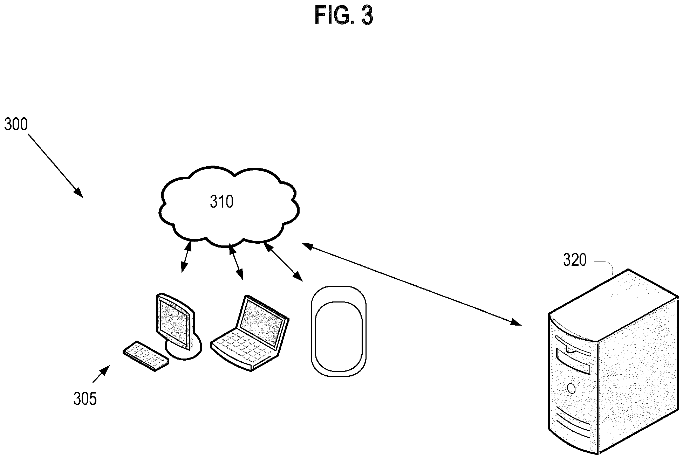

**Figure 1** is a flowchart of a computer-implemented method for managing a Robotics Process Automation (RPA) robot, according to an embodiment of the present disclosure. The method described herein may be implemented by a system, such as the system 200 as described with reference to Figure 2. This system may be referred to as a Process Manager in some implementations. Furthermore, in some implementations, the method may be performed by a client computing device, a network, a server, or a combination thereof, such as the client computing device 305, the network 310, and the server 320 as illustrated in Figure 3.

The method 100 begins at step S110 at which data associated with an operation metric of the RPA robot during execution of an automation workflow is acquired. In some embodiments, the acquisition may be performed starting from the launch of a relevant session during which the automation workflow is executed, and it may be triggered by such session being launched. In these embodiments, the triggering of the acquisition may not require any prior knowledge of the specific automation workflow that is to be executed. In other words, the acquisition of the data may be triggered by the launch of any session regardless of which automation workflow is to be executed during the session.

Alternatively or in addition, the acquisition may be performed during a specific session, for example one that is indicated by a user.

In some embodiments, acquiring data associated with an operation metric of the RPA robot at step S110 may be based on a definition of the automation workflow. For example, an automation workflow may reference a specific external web service or application with which it interacts - in this case, the acquiring of data (e.g. response times) may be based on this specific external web service or application. As another example, a policy associated with the workflow may reference a specific metric within the rules, such as central processing unit (CPU) or memory consumption. In this case, the acquiring of data may be based on the specific metric reference by the policy.

The data associated with an operation metric of the RPA robot may comprise, for example, at least one of: data related to an environment in which the RPA robot executes the automation workflow, data corresponding to a time-stamped sequence of internal stages in the automation workflow, and data associated with a status of a current session executed by the RPA robot. The data related to the environment may comprise at least one of: a metric associated with central processing unit (CPU) usage by the RPA robot, a metric associated with graphics processing unit (GPU) usage by the RPA robot, a metric associated with memory usage by the RPA robot, a metric associated with a number of applications started by the RPA robot during runtime, a metric associated with the connectivity of the RPA robot to an application (e.g. an external web service such as a web page or web mail), and a metric associated with another runtime process on the same runtime resource as the RPA robot. These metrics may be historical values and/or current (real-time) values.

In some embodiments, acquiring data associated with an operation metric of the RPA robot at step S110 may comprise at least one of: detecting the operation metric using a sensor, querying a database (directly or indirectly, e.g. via a data gateway), querying an operating system, querying an external data source (e.g. an external service that aggregates information about an operation system and/or an environment associated with the RPA robot), and receiving events associated with the operation metric that are triggered upon a corresponding condition being met. The queried database may be one that resides on a machine separate from the RPA robot. The querying operation(s) may be performed at respective predetermined time intervals.

Returning to Figure 1, at step S120, an optimising action is determined based on a policy and the acquired data associated with the operation metric of the RPA robot. In the context of the present disclosure, an optimising action refers to action which can optimise the execution of the automation workflow without necessarily affecting or modifying the definition(s) of the automation workflow. For example, as will be explained in more detail below, an optimising action may comprise a message corresponding to the results of the analysis, or more specifically the provision of such message to a user (e.g. through a display). As another example, an optimising action may comprise a management action, such as stopping the execution of the automation workflow by the RPA robot or changing an element of the environment in which the RPA robot operates. As explained in more detail below, these actions may be performed automatically as part of the "optimising action". It will also be appreciated that in some embodiments an optimising action may change the definition of the automation workflow, e.g. by updating, adding, or removing stages in the workflow definition.

Through the use of one or more policies, an end user can be in control of the management of the RPA robot and more specifically the execution of an automation workflow by the RPA robot. The policy may be a rule-based policy that dictates a corresponding condition for comparison with the operation metric and an action to be carried out based on results of the comparison between the condition and the operation metric. The corresponding condition may be in the form of a threshold (e.g. percentage of CPU usage), or a binary decision (e.g. whether a workflow is executing in an infinite loop).

Alternatively or in addition, the policy may dictate an optimisation goal for the RPA robot during execution of the automation workflow. Examples of optimisation goals include "complete workload within 1 hour", "keep CPU/memory usage within 40% of the total available usage", "ensure there are no blocked workflow executions (i.e. hanging sessions)", "complete process within service level agreement-based time limit of one hour", etc. Furthermore, in some embodiments a policy may involve more than one type of metric and/or data (e.g. the condition being "memory consumption over 60% and speed of stages executed is 3 times above a baseline"), where this data may be historical sensor data (e.g. the condition being "CPU consumption is > 40% over the last three monitoring periods, or "automation entered into infinite loop - traverses the same subset of stages repeatedly"). In some embodiments, the policy may also be used at step S110, such that acquiring data associated with an operation metric of the RPA robot may be based on the policy. For example, the policy may dictate a sensor for detecting the operation metric of the RPA robot.

In some embodiments, determining the optimising action at step S120 may comprise analysing the acquired data associated with the operation of the RPA robot during execution of the automation workflow based on the policy to predict or determine an error, and determining the optimising action based on the policy and the results of the analysis. In these embodiments, the optimising action may comprise at least one of: a message corresponding to the results of the analysis (e.g. an alert indicating that a "hanging-bot" is detected, an alert that a spike in exception errors is detected, or an alert that the execution is falling behind schedule, etc.), an action recommendation corresponding to the results of the analysis, and an automatic action to be carried out by the RPA robot corresponding to the results of the analysis. Analysing the acquired data may be performed using a deterministic algorithm and/or a first machine learning model. The deterministic algorithm may be associated with combinatorial reasoning and/or planning and scheduling. In the context of the present disclosure, a "hanging-bot" refers to a digital worker that is unable to proceed with execution of the next step in the workflow.

Furthermore, in these embodiments, analysing the acquired data associated with the operation of the RPA robot during execution of the automation workflow to predict or determine an error may comprise predicting or determining at least one of an error in the execution of the automation workflow by the RPA robot and an operation parameter to be optimised in the execution of the automation workflow by the RPA robot. In other words, in some embodiments the analysis may involve only the prediction or detection of an error in execution of the automation workflow, in some embodiments the analysis may involve only the prediction or detection of an operation parameter to be optimised in the execution of the automation workflow, and in some embodiments the analysis may involve both. The predicted or detected operation parameter to be optimised may relate to improving the execution performance of the RPA robot. For example, it may be predicted or detected that execution of the automation workflow is ahead of schedule - in this case the corresponding operation parameter (to be optimised) may be the amount of workload allocated to the RPA robot within a certain time period.

The predicted or determined error in the execution of the automation workflow by the RPA robot may correspond to an abnormal behaviour in the execution of the automation workflow. For example, the abnormal behaviour may comprise at least one of: an unexpected pause or termination of the automation workflow execution (e.g. the automation process being blocked), an operation metric of the RPA robot breaching a corresponding threshold (e.g. the CPU usage being above 60% of the total available capacity for the last 2 minutes, or that at the current rate of memory usage increase, the automation process will reach critical threshold in 30 minutes), an execution error of the automation workflow, and an unexpected output produced by the automation workflow.

As mentioned above, in some embodiments the optimising action may comprise an automation action to be carried out by the RPA robot, the automation action being one that corresponds to the results of the analysis. In these embodiments, the automatic action may comprise at least one of: restarting execution of the automation workflow by the RPA robot, postponing or stopping the execution of the automation workflow by the RPA robot, changing an element of the environment in which the RPA robot operates, changing an operation parameter of the RPA robot (e.g. a session variable specifying maximum waiting time for an application to respond, or an environment variable specifying a location of an input file etc.), changing a defining parameter (e.g. a subset of element attributes used during an object identification process) of and/or a stage in the automation workflow (where the automation workflow has been designed in terms of its internal logic, stages, etc. to allow such change(s)), skipping an optional stage in the automation workflow during execution (where the optional stage(s) have been designed and pre-labelled in the automation workflow as such, and may include any activity that is deemed (e.g. by a process owner) relevant but not essential, e.g. activities such as optionally sending emails to clients after an execution of a task, or generating a PDF version of a report etc.), requesting different allocation of central processing unit (CPU) resources, requesting different allocation of memory resources, requesting extra workload to be performed by the RPA robot, and storing information associated with the results of the analysis. For example, as mentioned above, analysis of the acquired data may involve predicting or detecting that an amount of workload allocated to the RPA robot can be optimised, and in this example the optimising action may comprise requesting extra workload to be performed by the RPA robot. As another example, changing a defining parameter of the automation workflow may comprise externally controlling an element of decision logic or a wait time in the automation workflow.

As mentioned above, in some embodiments analysing the acquired data may be performed using a first machine learning model. The first machine learning model may be trained with at least one of: operation metrics of an RPA robot, possible errors in executing an automation workflow by an RPA robot, and possible modifications to operation parameters for executing an automation workflow by an RPA robot. The first machine learning model may comprise at least one of: a classical ML model (e.g. a model based on linear/logistic regression, a kernel-based model, a model based on decision trees and random forests, etc.) and a Deep Learning model (e.g. a Recurrent Neural Network, a Long short-term memory model, a Convolution Neural Network, a model adopting Transformer Architecture, etc.).

Although not shown in Figure 1, in some embodiments the method 100 may further comprise storing information comprising at least one of: the acquired data associated with the operation metric of the RPA robot, the predicted or determined error in the execution of the automation workflow, the predicted or determined operation parameter to be optimised in the execution of the automation workflow, and the determined optimising action. Subsequent to storing this information, the method may further comprise training the first machine learning model based on the stored information.

Alternatively or additionally, although not shown in Figure 1, in some embodiments the method 100 may further comprise detecting execution of the automation workflow by the RPA robot. In these embodiments, the step of acquiring data associated with an operation metric of the RPA robot during execution of the automation workflow at S110 may be performed subsequent to the detection of the execution of the automation workflow, or performed upon the detection of the execution of the automation workflow. Furthermore, in these embodiments, the method may further comprise acquiring the policy subsequent to detecting execution of the automation workflow by the RPA robot, where the policy corresponds to the RPA robot and/or the automation workflow.

Alternatively or additionally, although not shown in Figure 1, in some embodiments the method 100 may further comprise receiving at least one of: a user input to enable or disable automatic execution of the determined optimising action, a user input to confirm or reject the determined optimising action, a user input to agree or disagree with the predicted or determined error and/or the operation parameter to be optimised, a user input to provide an alternative to the predicted or determined error and/or the operation parameter to be optimised, a user input to agree or disagree with the determined optimising action, a user input to provide an alternative to the determined optimising action, and a user input indicating user feedback subsequent to execution of the optimising action (e.g. a reply to "was the issue diagnosed accurately?" and/or "was the issue resolved satisfactorily?"). The method 100 may also comprise executing the optimising action, and in some embodiments this may be performed only if a user input enabling automatic execution of the determined optimising action, and/or a user input confirming the determined optimising action is received, and/or a user input agreeing with the predicted or determined error and/or the operation parameter to be optimised is received, and/or a user input agreeing with the determined optimising action is received.

The method 100 may further comprise storing the user input to confirm or reject the determined optimising action, and/or the user input to agree or disagree with the predicted or determined error and/or operation parameter to be optimised, and/or the user input to provide an alternative to the predicted or determined error and/or the operation parameter to be optimised, and/or the user input to agree or disagree with the determined optimising action, and/or the user input to provide an alternative to the determined optimising action, and/or the user feedback subsequent to execution of the optimising action, and training the first machine learning model based on the stored user input and/or user feedback.

In some embodiments, the method 100 may further comprise determining an effectiveness score of the determined optimising action using the first machine learning model. The effectiveness score may be determined based on at least one of: a binary outcome (i.e. whether the optimising action addresses or solves the predicted or determined error, for example whether the software robot is able to resume execution), a numerical performance metric (e.g. a metric that indicates an extent to which the predetermined or determined error has been addressed, such as a difference between the current CPU usage to a target level after the optimising action has been executed, or a difference between the new expected completion time to a target service level agreement (SLA) completion time ), or a subjective user evaluation (e.g. the user indicating how satisfied they are with the optimising action, for example on a scale of 1 to 10).

As mentioned above, in some embodiments the policy (which is used in step S120 for determining an optimising action) may dictate an optimisation goal for the RPA robot during execution of the automation workflow. In these embodiments, determining an optimising action at step S120 may be further based on at least one of a deterministic algorithm and a second trained machine learning model. The second trained machine learning model may be trained with at least one of: operation metrics of an RPA robot, operation parameters in the execution of an automation workflow by an RPA robot, and a deterministic algorithm associated with at least one of: rule execution, combinatorial optimisation, and artificial intelligence (AI) planning and scheduling. In more detail, in some embodiments the second trained machine learning model may be trained based on data associated with a quality of an outcome of previously executed optimising actions, e.g. whether or not the executed optimising action resolved a detected error. The second machine learning model may comprise at least one of: a classical Machine Learning (ML) model (e.g. a model based on linear/logistic regression, a kernel-based model, a model based on decision trees and random forests, etc.) and a Deep Learning model (e.g. a Recurrent Neural Network, a Long short-term memory (LSTM) model, a Convolutional Neural Network, a model adopting Transformer Architecture, etc.).

In some embodiments, the step of acquiring data associated with an operation metric of the RPA robot during execution of an automation workflow at step S110 may comprise acquiring first data associated with a first session at a runtime resource corresponding to the automation workflow. In these embodiments, the method 100 may further comprise acquiring second data associated with an operation metric of the RPA robot during execution of the second automation workflow, the second data being associated with a second session at the runtime resource, and determining an optimising action based on a second policy and the acquired second data. Furthermore, in these embodiments, acquiring the second data may be triggered by the second session being launched. The first and second policies may be the same policy or they may be different policies. It will be appreciated that the triggering of the acquisition of the second data may not require any prior knowledge of the specific automation workflow that is to be executed during the second session.

**Figure 2** is a block diagram of a system for managing performance of an RPA robot, according to an embodiment of the present disclosure. In some embodiments, the system 200 illustrated in Figure 2 may be implemented as a Process Manager, for example one that is implemented in a server (e.g. the server 320 as described below with reference to Figure 3). As shown in Figure 2, there is provided a system 200 comprising an acquiring unit 210 and a determining unit 220.

The acquiring unit 210 is configured to acquire data associated with an operation metric of the RPA robot during execution of an automation workflow. The acquiring unit 210 may be configured to acquire the data upon a (new) session being launched during which the automation workflow is executed. The acquiring unit 210 may be configured to acquire the data during a specific session (e.g. as indicated by a user). In some embodiments, the acquiring unit 210 may be configured to acquire data associated with an operation metric of the RPA robot based on a definition of the automation workflow. For example, an automation workflow may reference a specific external web service or application with which it interacts. In this case, the acquiring of data (e.g. response times) may be based on this specific external web service or application. As another example, a policy associated with the workflow may reference a specific metric within the rules, such as CPU or memory consumption. In this case, the acquiring of data may be based on this specific metric referenced by the policy.

The data associated with an operation metric of the RPA robot may comprise, for example, at least one of: data related to an environment in which the RPA robot executes the automation workflow, data corresponding to a time-stamped sequence of internal stages in the automation workflow, and data associated with a status of a current session executed by the RPA robot. The data related to the environment may comprise at least one of: a metric associated with CPU usage by the RPA robot, a metric associated with GPU usage by the RPA robot, a metric associated with memory usage by the RPA robot, a metric associated with a number of applications started by the RPA robot during runtime, a metric associated with the connectivity of the RPA robot to an application (e.g. an external web service such as a web page or web mail), and a metric associated with another runtime process on the same runtime resource as the RPA robot. These metrics may be historical values and/or current (real-time) values.

In some embodiments, the acquiring unit 210 may be configured to acquire data associated with an operation metric of the RPA robot by performing at least one of: detecting the operation metric using a sensor, querying a database (directly or indirectly, e.g. via a data gateway), querying an operating system, querying an external data source (e.g. an external service that aggregates information about an operation system and/or an environment associated with the RPA robot), and receiving events associated with the operation metric that are triggered upon a corresponding condition being met. The queried database may be one that resides on a machine separate from the RPA robot. The query operation(s) may be performed at respective predetermined time intervals.

The determining unit 220 is configured to determine an optimising action based on the policy and the acquired data associated with the operation metric of the RPA robot. As mentioned above with reference to Figure 1, in the context of the present disclosure an optimising action refers to action which can optimise the execution of the automation workflow without necessarily affecting or modifying the definition(s) of the automation workflow. Nevertheless, in some embodiments, an optimising action may change the definition of the automation workflow, e.g. by updating, adding, or removing stages in the workflow definition.

Through the use of one or more policies, an end user can be in control of the management of the RPA robot and more specifically the execution of an automation workflow by the RPA robot. The policy may be a rule-based policy that dictates a corresponding condition for comparison with the operation metric and an action to be carried out based on results of the comparison between the condition and the operation metric. Alternatively or in addition, the policy may dictate an optimisation goal for the RPA robot during execution of the automation workflow. The corresponding condition may be in the form of a threshold (e.g. percentage of CPU usage of the total available usage) or a binary decision (e.g. whether the workflow is executing in an infinite loop). Furthermore, in some embodiments a policy may involve more than one type of metric and/or data, where this data may be historical sensor data. In some embodiments, the policy may also be used by the acquiring unit 210, such that the acquiring unit 210 is configured to acquire data associated with an operation metric of the RPA robot based on the policy. For example, the policy may dictate a sensor for detecting the operation metric of the RPA robot.

In some embodiments, the determining unit 220 may be configured to determine the optimising action by analysing the acquired data associated with the operation of the RPA robot during execution of the automation workflow based on the policy to predict or determine an error, and determining the optimising action based on the policy and the results of the analysis. In these embodiments, the optimising action may comprise at least one of: a message corresponding to the results of the analysis (e.g. an alert indicating that a "hanging-bot" is detected, an alert that a spike in exception errors is detected, or an alert that the execution is falling behind schedule, etc.), an action recommendation corresponding to the results of the analysis, and an automatic action to be carried out by the RPA robot corresponding to the results of the analysis. The determining unit 220 may be configured to analyse the acquired data using a deterministic algorithm and/or a first machine learning model. The deterministic algorithm may involve combinatorial reasoning and/or planning and scheduling.

In these embodiments, the determining unit 220 may be configured to analyse the acquired data associated with the operation of the RPA robot during execution of the automation workflow to predict or determine at least one of: an error in the execution of the automation workflow by the RPA robot and an operation parameter to be optimised in the execution of the automation workflow by the RPA robot. In other words, in some embodiments the analysis may involve only the prediction or detection of an error in execution of the automation workflow, in some embodiments the analysis may involve only the prediction or detection of an operation parameter to be optimised in the execution of the automation workflow, and in some embodiments the analysis may involve both. The predicted or detected operation parameter to be optimised may relate to improving the execution performance of the RPA robot. For example, it may be predicted or detected that execution of the automation workflow is ahead of schedule - in this case the corresponding operation parameter (to be optimised) may be the amount of workload allocated to the RPA robot within a certain time period.

The predicted or determined error in the execution of the automation workflow by the RPA robot may correspond to an abnormal behaviour in the execution of the automation workflow. For example, the abnormal behaviour may comprise at least one of: an unexpected pause or termination of the automation workflow execution, an operation metric of the RPA robot breaching a corresponding threshold, an execution error of the automation workflow, and an unexpected output produced by the automation workflow.

As mentioned above, the optimising action may comprise an automation action to be carried out by the RPA robot in some embodiments, the automation action being one that corresponds to the results of the analysis. In these embodiments, the automatic action may comprise at least one of: restarting execution of the automation workflow by the RPA robot, postponing or stopping the execution of the automation workflow by the RPA robot, changing an element of the environment in which the RPA robot operates, changing an operation parameter of the RPA robot, changing a defining parameter of and/or a stage in the automation workflow (where the automation workflow has been designed in terms of its internal logic, stages, etc. to allow such change(s)), skipping an optional stage in the automation workflow during execution (where the optional stage(s) have been designed and pre-labelled as such in the automation workflow), requesting different allocation of CPU resources, requesting different allocation of memory resources, requesting extra workload to be performed by the RPA robot, and storing information associated with the results of the analysis. For example, as mentioned above, analysis of the acquired data by the determining unit 220 may involve predicting or detecting that an amount of workload allocated to the RPA robot can be optimised, and in this example the optimising action may comprise requesting extra workload to be performed by the RPA robot. As another example, changing a defining parameter of the automation workflow may comprise externally controlling an element of decision logic or a wait time in the automation workflow.

As mentioned above, the determining unit 220 may be configured to analyse the acquired data using a first machine learning model. The first machine learning model may be trained with at least one of: operation metrics of an RPA robot, possible errors in executing an automation workflow by an RPA robot, and possible modifications to operation parameters for executing an automation workflow by an RPA robot. The first machine learning model may be comprise at least one of: a classical ML model (e.g. a model based on linear/logistic regression, a kernel-based model, a model based on decision trees and random forests, etc.) and a Deep Learning model (e.g. a Recurrent Neural Network, a Long short-term memory model, a model adopting Transformer Architecture, etc.).

In some embodiments, the system 200 may further comprise a storing unit configured to store information comprising at least one of: the acquired data associated with the operation metric of the RPA robot, the predicted or determined error in the execution of the automation workflow, the predicted or determined operation parameter to be optimised in the execution of the automation workflow, and the determined optimising action. Furthermore, in these embodiments, the system 200 may further comprise a training unit configured to train the first machine learning model based on the stored information (subsequent to the storing unit storing the information).

In some embodiments, the system 200 may further comprise a detecting unit configured to detect execution of the automation workflow by the RPA robot. In these embodiments, the acquiring unit 210 may be configured to acquire data associated with an operation metric of the RPA robot during execution of the automation workflow only after or upon the detection of the execution of the automation workflow by the detecting unit. Furthermore, in these embodiments, the acquiring unit 210 may be configured to acquire the policy after the detecting unit detects execution of the automation workflow by the RPA robot, where the policy corresponds to the RPA robot and/or the automation workflow.

Alternatively or additionally, although not shown in Figure 2, in some embodiments the system 200 may further comprise a receiving unit configured to receive at least one of: a user input to enable or disable automatic execution of the determined optimising action, a user input to confirm or reject the determined optimising action, a user input to agree or disagree with the predicted or determined error and/or the operation parameter to be optimised, a user input to provide an alternative to the predicted or determined error and/or the operation parameter to be optimised, a user input to agree or disagree with the determined optimising action, a user input to provide an alternative to the determined optimising action, and a user input indicating user feedback subsequent to execution of the optimising action. The system 200 may further comprise an executing unit configured to execute the optimising action, and in some embodiments the execution may only be performed by the executing unit if a user input enabling automatic execution of the determined optimising action, and/or a user input confirming the determined optimising action is received, and/or a user input agreeing with the predicted or determined error and/or the operation parameter to be optimised is received, and/or a user input agreeing with the determined optimising action is received.

In some embodiments, the system 200 may further comprise a storing unit configured to store the user input to confirm or reject the determined optimising action, and/or the user input to agree or disagree with the predicted or determined error and/or operation parameter to be optimised, and/or the user input to provide an alternative to the predicted or determined error and/or the operation parameter to be optimised, and/or the user input to agree or disagree with the determined optimising action, and/or the user input to provide an alternative to the determined optimising action, and/or the user feedback subsequent to execution of the optimising action. In these embodiments, the system 200 may further comprise a training unit configured to train the first machine learning model based on the stored user input and/or user feedback. The storing unit and/or the training unit in these embodiments may be the same storing unit and/or training unit as mentioned in embodiments above.

In some embodiments, the determining unit 220 may be further configured to determine an effectiveness score of the determined optimising action using the first machine learning model. The effectiveness score may be determined based on at least one of: a binary outcome (i.e. whether the optimising action addresses or solves the predicted or determined error, for example whether the software robot is able to resume execution), a numerical performance metric (e.g. a metric that indicates an extent to which the predetermined or determined error has been addressed, such as a difference between the current CPU usage to a target level after the optimising action has been executed, or a difference between the new expected completion time to a target service level agreement (SLA) completion time ), or a subjective user evaluation (e.g. the user indicating how satisfied they are with the optimising action, for example on a scale of 1 to 10).

As mentioned above, in some embodiments the policy (which is used in by the determining unit 220 for determining an optimising action) may dictate an optimisation goal for the RPA robot during execution of the automation workflow. In these embodiments, the determining unit 220 may be configured to determine the optimising action further based on at least one of a deterministic algorithm and a second trained machine learning model. The second trained machine learning model may be trained with at least one of: operation metrics of an RPA robot, operation parameters in the execution of an automation workflow by an RPA robot, and a deterministic algorithm associated with at least one of: rule execution, combinatorial optimisation, Al planning and scheduling. In more detail, in some embodiments the second trained machine learning model may be trained based on data associated with a quality of an outcome of previously executed optimising actions, e.g. whether or not the executed optimising action resolved a detected error. The second machine learning model may comprise at least one of: a classical Machine Learning model (e.g. a model based on linear/logistic regression, a kernel-based model, a model based on decision trees and decision trees and random forests, etc.) and a Deep Learning model (e.g. a Recurrent Neural Network, a Long short-term memory (LSTM) model, a Convolutional Neural Network, a model adopting Transformer Architecture, etc.).

In some embodiments, the acquiring unit 210 may be configured to acquire data associated with an operation metric of the RPA robot during execution of an automation workflow by acquiring first data associated with a first session at a runtime resource corresponding to the automation workflow. In these embodiments, the acquiring unit 210 may be further configured to acquire second data associated with an operation metric of the RPA robot during execution of the second automation workflow, the second data being associated with a second session at the runtime resource. Furthermore, in these embodiments, the determining unit 220 may be configured to determine a new optimising action based on a second policy and the acquired second data. The acquiring unit 210 may be configured to acquire the second data upon being triggered by the second session being launched. The first and second policies may be the same policy or they may be different policies.

In some embodiments, the system 200 may be providable as an external component to the automation workflow. Thus, at least in these embodiments the system 200 is not intrusive and does not require internal changes to the RPA robot and/or the automation workflow in order to monitor and/or control them. The system 200 can make use of interfaces (e.g. sensors and/or actuators) that are already available to acquire the relevant data (i.e. the data associated with an operation metric of the RPA robot during execution of an automation workflow) and/or to impact the execution of the automation (i.e. through executing optimising action(s)). Furthermore, in this way, the system 200 can be configured to allow an organisation that runs a plurality of processes (e.g. business-related automation workflows) with different RPA robots across different runtime resources to dictate whether or not to apply the functionalities of the system 200 on a given runtime resource.

**Figure 3** is a diagram illustrating a topology for RPA robot management, according to an embodiment of the present disclosure. Topology 300 may include client computing devices 305 and a server 320 that is configured to be communicatively coupled over network 310.

The network 310 may be wired or wireless network such as the Internet, an intranet, a Local Area Network (LAN), a Wide Area Network (WAN), a Near-field Communication (NFC) network, Bluetooth, infrared, radio frequency, a cellular network or another type of network. It will be understood that the network 310 may be a combination of multiple different kinds of wired or wireless networks.

Each client computing device 305 may be a smart phone, tablet computer, laptop computer, a computer, personal data assistant, or any other type of mobile device with a hardware processor that are configured to process instructions and connected to one or more portions of the network 310. Each client computing device 305 may have a graphical user interface that is configured to allow a user to interact with a processor of the client computing device 305.

The server 320 may include physical computing devices residing at a particular location or may be deployed in a cloud computing network environment. In the present disclosure, "cloud computing" may be defined as a model for enabling ubiquitous, convenient, on-demand network access to a shared pool of configurable computing resources (e.g. networks, servers, storage, applications, and services) that can be rapidly provisioned via virtualisation and released with minimal management effort or service provider interaction, and then scaled accordingly. A cloud model can be composed of various characteristics (e.g. on-demand self-service, broad network access, resource pooling, rapid elasticity, measured service, etc.), service models (e.g. Software as a Service (SaaS), Platform as a Service (PaaS), Infrastructure as a Service (laaS), and deployment models (e.g. private cloud, community cloud, public cloud, hybrid cloud, etc.). The server 320 may include any combination of one or more computer-usable or computer-readable media. In some embodiments, the server 320 may be configured to manage an RPA robot. For example, the server 320 may perform at least part of the method 100 as described above with reference to Figure 1.

It will be appreciated that this description is by way of example only; alterations and modifications may be made to the described embodiment without departing from the scope of the disclosure as defined in the claims.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the scope of the appended claims. For example, it is to be understood that the present technology contemplates that, to the extent possible, one or more features of any implementation can be combined with one or more features of any other implementation.

Reference throughout this specification to "one embodiment", "an embodiment", "one example" or "an example" means that a particular feature, structure or characteristic described in connection with the embodiment or example is included in at least one embodiment of the present disclosure. Thus, appearances of the phrases "in one embodiment", "in an embodiment", "one example" or "an example" in various places throughout this specification are not necessarily all referring to the same embodiment or example. Furthermore, the particular features, structures or characteristics may be combined in any suitable combinations and/or sub-combinations in one or more embodiments or examples. In addition, it is appreciated that the figures provided herewith are for explanation purposes to persons ordinarily skilled in the art and that the drawings are not necessarily drawn to scale.

Embodiments in accordance with the present disclosure may be embodied as an apparatus, method, or computer program product. For example, in some embodiments there may be provided a computer program product comprising instructions which, when the program is executed by a processor, cause the processor to carry out the method described with respect to Figure 1. As another example, in some embodiments there may be provided a computer-readable storage medium comprising instructions which, when executed by a computer, cause the computer to carry out the steps of the method as described in Figure 1. Accordingly, the present embodiments may take the form of an entirely hardware embodiment, an entirely software embodiment (including firmware, resident software, microcode, etc.), or an embodiment combining software and hardware aspects that may all generally be referred to herein as a "module" or "system". Furthermore, embodiments of the present disclosure may take the form of a computer program product embodied in any tangible medium of expression having computer-usable program code embodied in the medium.

Although described in connection with an exemplary computing system environment, embodiments of the present disclosure are operative with numerous other general purpose or special purpose computing system environments or configurations. Examples of well-known computing systems, environments, and/or configurations that may be suitable for use with aspects of the disclosure include, but are not limited to, mobile computing devices, personal computers (e.g. desktop computers), server computers, hand-held or laptop devices, multiprocessor systems, gaming consoles, microprocessor-based systems, set top boxes, programmable consumer electronics, mobile telephones, network PCs, minicomputers, mainframe computers, distributed computing environments that include any of the above systems or devices, and the like.

Any combination of one or more computer-usable or computer-readable media may be utilised. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. Computer program code for carrying out operations of embodiments of the present disclosure may be written in any combination of one or more programming languages.

The flowcharts and block diagrams illustrate the architecture, functionality, and operation of possible implementations of systems, methods, and computer program products according to various embodiments of the present disclosure. In this regard, each block in the flowcharts or block diagrams may represent a module, segment, or portion of code, which comprises one or more executable instructions for implementing the specified logical function(s). It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowcharts and/or block diagrams.

## Claims

1. A computer-implemented method (100) for managing a Robotics Process Automation, RPA, robot, the method comprising:
acquiring (S110) data associated with an operation metric of the RPA robot during runtime execution of an automation workflow;
determining (S120) an optimising action based on a policy and the acquired data associated with the operation metric of the RPA robot;
wherein determining (S120) the optimising action comprises:
analysing the acquired data associated with the operation metric of the RPA robot during runtime execution of the automation workflow based on the policy to predict or determine an error; and
determining the optimising action based on the policy and the results of the analysis;
wherein the optimising action comprises an automatic action to be carried out by the RPA robot corresponding to the results of the analysis.

2. The method according to claim 1, wherein analysing the acquired data associated with the operation of the RPA robot during execution of the automation workflow to predict or determine an error comprises predicting or determining at least one of an error in the execution of the automation workflow by the RPA robot and an operation parameter to be optimised in the execution of the automation workflow by the RPA robot.

3. The method according to claim 2, wherein the predicted or determined error in the execution of the automation workflow by the RPA robot corresponds to an abnormal behaviour in the execution of the automation workflow, wherein the abnormal behaviour comprises at least one of: an unexpected pause or termination of the automation workflow execution, an operation metric of the RPA robot breaching a corresponding threshold, an execution error of the automation workflow, and an unexpected output produced by the automation workflow.

4. The method according to any one of claims 1 to 3, wherein the optimising action further comprises at least one of: a message corresponding to the results of the analysis, an action recommendation corresponding to the results of the analysis.

5. The method according to claim 4, wherein the automatic action comprises at least one of: restarting execution of the automation workflow by the RPA robot, postponing or stopping the execution of the automation workflow by the RPA robot, changing an element of the environment in which the RPA robot operates, changing an operation parameter of the RPA robot, changing a defining parameter of and/or a stage in the automation workflow, skipping an optional stage in the automation workflow during execution, requesting different allocation of central processing unit, CPU, resources, requesting different allocation of memory resources, requesting extra workload to be performed by the RPA robot, and storing information associated with the results of the analysis.

6. The method according to any one of claims 1 to 5, wherein analysing the acquired data comprises analysing the acquired data using at least one of a deterministic algorithm and a first machine learning model.

7. The method according to any one of the preceding claims, further comprising receiving at least one of: a user input to enable or disable automatic execution of the determined optimising action, a user input to confirm or reject the determined optimising action, a user input to agree or disagree with the predicted or determined error and/or the operation parameter to be optimised, a user input to provide an alternative to the predicted or determined error and/or the operation parameter to be optimised, a user input to agree or disagree with the determined optimising action, a user input to provide an alternative to the determined optimising action, and a user input indicating user feedback subsequent to execution of the optimising action.

8. The method according to any one of the preceding claims, wherein the method further comprises executing the optimising action.

9. The method according to any one of the preceding claims, wherein the policy is a rule-based policy that dictates a corresponding condition for comparison with the operation metric and an action to be carried out based on results of the comparison between the condition and the operation metric.

10. The method according to any one of the preceding claims, wherein the policy dictates an optimisation goal for the RPA robot during execution of the automation workflow, and wherein determining an optimising action is further based on at least one of a deterministic algorithm and a second trained machine learning model.

11. The method according to any one of the preceding claims, wherein acquiring (S110) data associated with an operation metric of the RPA robot during execution of an automation workflow comprises acquiring first data associated with a first session at a runtime resource corresponding to the automation workflow, and wherein the method further comprises:
acquiring second data associated with an operation metric of the RPA robot during execution of the second automation workflow, wherein the second data are associated with a second session at the runtime resource; and
determining an optimising action based on a second policy and the acquired second data.

12. A system (200) for managing performance of a Robotics Process Automation, RPA robot, the system comprising:
an acquiring unit (210) configured to acquire data associated with an operation metric of the RPA robot during runtime execution of an automation workflow; and
a determining unit (220) configured to:
analyse the acquired data associated with the operation metric of the RPA robot during runtime execution of the automation workflow based on a policy to predict or determine an error; and
determine an optimising action based on the policy and the results of the analysis;
wherein the optimising action comprises an automatic action to be carried out by the RPA robot corresponding to the results of the analysis.

13. The system according to claim 12, wherein the system (200) is providable as an external component to the automation workflow.

14. A computer-readable storage medium comprising instructions which, when executed by a computer, cause the computer to carry out the steps of the method of any one of claims 1 to 11.

## Patentansprüche

1. Computerimplementiertes Verfahren (100) zum Verwalten eines Robotikprozessautomatisierungsroboters, RPA-Roboters, wobei das Verfahren Folgendes umfasst:
Erfassen (S110) von Daten, die während der Laufzeitausführung eines Automatisierungsworkflows mit einer Betriebsmetrik des RPA-Roboters assoziiert sind;
Bestimmen (S120) einer Optimierungsmaßnahme basierend auf einer Richtlinie und den erfassten Daten, die mit der Betriebsmetrik des RPA-Roboters assoziiert sind;
wobei das Bestimmen (S120) der Optimierungsmaßnahme Folgendes umfasst:
Analysieren der erfassten Daten, die mit der Betriebsmetrik des RPA-Roboters assoziiert sind, während der Laufzeitausführung des Automatisierungsworkflows basierend auf der Richtlinie, um einen Fehler vorherzusagen oder zu bestimmen; und
Bestimmen der Optimierungsmaßnahme basierend auf der Richtlinie und den Ergebnissen der Analyse;
wobei die Optimierungsmaßnahme eine automatische Maßnahme umfasst, die durch den RPA-Roboter entsprechend den Ergebnissen der Analyse auszuführen ist.

2. Verfahren nach Anspruch 1, wobei das Analysieren der erfassten Daten, die mit dem Betrieb des RPA-Roboters assoziiert sind, während der Ausführung des Automatisierungsworkflows, um einen Fehler vorherzusagen oder zu bestimmen, Vorhersagen oder Bestimmen eines Fehlers bei der Ausführung des Automatisierungsworkflows durch den RPA-Roboter und/oder eines Betriebsparameters, der bei der Ausführung des Automatisierungsworkflows durch den RPA-Roboter zu optimieren ist, umfasst.

3. Verfahren nach Anspruch 2, wobei der vorhergesagte oder bestimmte Fehler bei der Ausführung des Automatisierungsworkflows durch den RPA-Roboter einem anormalen Verhalten bei der Ausführung des Automatisierungsworkflows entspricht, wobei das anormale Verhalten mindestens eines von Folgendem umfasst: eine unerwartete Pause oder Beendigung der Ausführung des Automatisierungsworkflows, eine Betriebsmetrik des RPA-Roboters, die einen entsprechenden Schwellenwert überschreitet, einen Ausführungsfehler des Automatisierungsworkflows und eine unerwartete Ausgabe, die durch den Automatisierungsworkflow erzeugt wird.

4. Verfahren nach einem der Ansprüche 1 bis 3, wobei die Optimierungsmaßnahme ferner eine Nachricht, die den Ergebnissen der Analyse entspricht und/oder eine Maßnahmeempfehlung, die den Ergebnissen der Analyse entspricht, umfasst.

5. Verfahren nach Anspruch 4, wobei die automatische Maßnahme mindestens eines von Folgendem umfasst: Neustarten der Ausführung des Automatisierungsworkflows durch den RPA-Roboter, Verschieben oder Stoppen der Ausführung des Automatisierungsworkflows durch den RPA-Roboter, Ändern eines Elements der Umgebung, in der der RPA-Roboter arbeitet, Ändern eines Betriebsparameters des RPA-Roboters, Ändern eines definierenden Parameters des Automatisierungsworkflows und/oder einer Stufe des Automatisierungsworkflows, Überspringen einer optionalen Stufe des Automatisierungsworkflows während der Ausführung, Anfordern einer unterschiedlichen Zuweisung von Zentralverarbeitungseinheit-Ressourcen, CPU-Ressourcen, Anfordern einer unterschiedlichen Zuweisung von Speicherressourcen, Anfordern einer zusätzlichen Arbeitslast, die durch den RPA-Roboter durchzuführen ist, und Speichern von Informationen, die mit den Ergebnissen der Analyse assoziiert sind.

6. Verfahren nach einem der Ansprüche 1 bis 5, wobei das Analysieren der erfassten Daten das Analysieren der erfassten Daten unter Verwendung eines deterministischen Algorithmus und/oder eines ersten Maschinenlernmodells umfasst.

7. Verfahren nach einem der vorhergehenden Ansprüche, das ferner das Empfangen von mindestens einem von Folgendem umfasst: einer Benutzereingabe zum Aktivieren oder Deaktivieren einer automatischen Ausführung der bestimmten Optimierungsmaßnahme, einer Benutzereingabe, um die bestimmte Optimierungsmaßnahme zu bestätigen oder abzulehnen, einer Benutzereingabe, um mit dem vorhergesagten oder bestimmten Fehler übereinzustimmen oder nicht übereinzustimmen, und/oder dem zu optimierenden Betriebsparameter, eine Benutzereingabe, um eine Alternative zu dem vorhergesagten oder bestimmten Fehler und/oder dem zu optimierenden Betriebsparameter bereitzustellen, eine Benutzereingabe, um mit der bestimmten Optimierungsmaßnahme übereinzustimmen oder nicht übereinzustimmen, eine Benutzereingabe, um eine Alternative zu der bestimmten Optimierungsmaßnahme bereitzustellen, und eine Benutzereingabe, die eine Benutzerrückmeldung nach der Ausführung der Optimierungsmaßnahme angibt.

8. Verfahren nach einem der vorhergehenden Ansprüche, wobei das Verfahren ferner das Ausführen der Optimierungsmaßnahme umfasst.

9. Verfahren nach einem der vorhergehenden Ansprüche, wobei die Richtlinie eine regelbasierte Richtlinie ist, die eine entsprechende Bedingung zum Vergleich mit der Betriebsmetrik und eine auszuführende Maßnahme basierend auf Ergebnissen des Vergleichs zwischen der Bedingung und der Betriebsmetrik vorschreibt.

10. Verfahren nach einem der vorhergehenden Ansprüche, wobei die Richtlinie ein Optimierungsziel für den RPA-Roboter während der Ausführung des Automatisierungsworkflows vorschreibt und wobei das Bestimmen einer Optimierungsmaßnahme ferner auf einem deterministischen Algorithmus und/oder einem zweiten trainierten Maschinenlernmodell basiert.

11. Verfahren nach einem der vorhergehenden Ansprüche, wobei das Erfassen (S110) von Daten, die mit einer Betriebsmetrik des RPA-Roboters assoziiert sind, während der Ausführung eines Automatisierungsworkflows das Erfassen erster Daten, die mit einer ersten Sitzung assoziiert sind, an einer Laufzeitressource, die dem Automatisierungsworkflow entspricht, umfasst, und wobei das Verfahren ferner Folgendes umfasst:
Erfassen zweiter Daten, die mit einer Betriebsmetrik des RPA-Roboters assoziiert sind, während der Ausführung des zweiten Automatisierungsworkflows, wobei die zweiten Daten mit einer zweiten Sitzung an der Laufzeitressource assoziiert sind; und
Bestimmen einer Optimierungsmaßnahme basierend auf einer zweiten Richtlinie und den erfassten zweiten Daten.

12. System (200) zum Verwalten der Leistungsfähigkeit eines Robotikprozessautomatisierungsroboters, RPA-Roboters, wobei das System Folgendes umfasst:
eine Erfassungseinheit (210), die dazu ausgelegt ist, Daten zu erfassen, die mit einer Betriebsmetrik des RPA-Roboters während der Laufzeitausführung eines Automatisierungsworkflows assoziiert sind; und
eine Bestimmungseinheit (220), die dazu ausgelegt ist:
die erfassten Daten, die mit der Betriebsmetrik des RPA-Roboters assoziiert sind, zu analysieren während der Laufzeitausführung des Automatisierungsworkflows basierend auf einer Richtlinie, um einen Fehler vorherzusagen oder zu bestimmen; und
Bestimmen einer Optimierungsmaßnahme basierend auf der Richtlinie und den Ergebnissen der Analyse;
wobei die Optimierungsmaßnahme eine automatische Maßnahme umfasst, die durch den RPA-Roboter entsprechend den Ergebnissen der Analyse auszuführen ist.

13. System nach Anspruch 12, wobei das System (200) als eine externe Komponente für den Automatisierungsworkflow bereitgestellt werden kann.

14. Computerlesbares Speichermedium, das Anweisungen umfasst, die, wenn sie von einem Computer ausgeführt werden, den Computer veranlassen, die Schritte des Verfahrens nach einem der Ansprüche 1 bis 11 durchzuführen.

## Revendications

1. Procédé (100) mis en œuvre par ordinateur pour gérer un robot d'automatisation de processus robotique, RPA, le procédé comportant les étapes consistant à :
acquérir (S110) des données associées à une métrique de fonctionnement du robot de RPA pendant l'exécution d'un flux de travaux d'automatisation ;
déterminer (S120) une action d'optimisation d'après une politique et les données acquises associées à la métrique de fonctionnement du robot de RPA ;
la détermination (S120) de l'action d'optimisation comportant :
l'analyse des données acquises associées à la métrique de fonctionnement du robot de RPA pendant l'exécution du flux de travaux d'automatisation d'après la politique pour prédire ou déterminer une erreur ; et
la détermination de l'action d'optimisation d'après la politique et les résultats de l'analyse ;
l'action d'optimisation comportant une action automatique à réaliser par le robot de RPA correspondant aux résultats de l'analyse.

2. Procédé selon la revendication 1, l'analyse des données acquises associées au fonctionnement du robot de RPA pendant l'exécution du flux de travaux d'automatisation pour prédire ou déterminer une erreur comportant la prédiction ou la détermination d'une erreur dans l'exécution du flux de travaux d'automatisation par le robot de RPA et/ou d'un paramètre de fonctionnement à optimiser dans l'exécution du flux de travaux d'automatisation par le robot de RPA.

3. Procédé selon la revendication 2, l'erreur prédite ou déterminée dans l'exécution du flux de travaux d'automatisation par le robot de RPA correspondant à un comportement anormal dans l'exécution du flux de travaux d'automatisation, le comportement anormal comportant au moins un comportement parmi: une suspension ou une cessation imprévue de l'exécution du flux de travaux d'automatisation, le fait qu'une métrique de fonctionnement du robot de RPA franchisse un seuil correspondant, une erreur d'exécution du flux de travaux d'automatisation, et une sortie imprévue produite par le flux de travaux d'automatisation.

4. Procédé selon l'une quelconque des revendications 1 à 3, l'action d'optimisation comportant en outre au moins un élément parmi: un message correspondant aux résultats de l'analyse, une recommandation d'action correspondant aux résultats de l'analyse.

5. Procédé selon la revendication 4, l'action automatique comportant au moins une action parmi celles consistant à: redémarrer l'exécution du flux de travaux d'automatisation par le robot de RPA, reporter ou arrêter l'exécution du flux de travaux d'automatisation par le robot de RPA, modifier un élément de l'environnement dans lequel fonctionne le robot de RPA, modifier un paramètre de fonctionnement du robot de RPA, modifier un paramètre déterminant et/ou une étape du flux de travaux d'automatisation, sauter une étape optionnelle dans le flux de travaux d'automatisation pendant l'exécution, demander une allocation différente de ressources d'unité centrale de traitement, CPU, demander une allocation différente de ressources de mémoire, demander qu'une charge de travail supplémentaire soit réalisée par le robot de RPA, et stocker des informations associées aux résultats de l'analyse.

6. Procédé selon l'une quelconque des revendications 1 à 5, l'analyse des données acquises comportant l'analyse des données acquises à l'aide d'un algorithme déterministe et/ou d'un premier modèle d'apprentissage automatique.

7. Procédé selon l'une quelconque des revendications précédentes, comportant en outre la réception d'au moins une entrée parmi: une entrée d'utilisateur pour activer ou désactiver l'exécution automatique de l'action d'optimisation déterminée, une entrée d'utilisateur pour confirmer ou rejeter l'action d'optimisation déterminée, une entrée d'utilisateur pour exprimer l'accord ou le désaccord avec l'erreur prédite ou déterminée et/ou le paramètre de fonctionnement à optimiser, une entrée d'utilisateur pour fournir une alternative à l'erreur prédite ou déterminée et/ou au paramètre de fonctionnement à optimiser, une entrée d'utilisateur pour exprimer l'accord ou le désaccord avec l'action d'optimisation déterminée, une entrée d'utilisateur pour fournir une alternative à l'action d'optimisation déterminée, et une entrée d'utilisateur indiquant une rétroaction d'utilisateur suite à l'exécution de l'action d'optimisation.

8. Procédé selon l'une quelconque des revendications précédentes, le procédé comportant en outre l'exécution de l'action d'optimisation.

9. Procédé selon l'une quelconque des revendications précédentes, la politique étant une politique basée sur des règles qui impose une condition correspondante pour une comparaison avec la métrique de fonctionnement et une action à réaliser d'après des résultats de la comparaison entre la condition et la métrique de fonctionnement.

10. Procédé selon l'une quelconque des revendications précédentes, la politique imposant un objectif d'optimisation pour le robot de RPA pendant l'exécution du flux de travaux d'automatisation, et la détermination d'une action d'optimisation étant en outre basée sur un algorithme déterministe et/ou un second modèle entraîné d'apprentissage automatique.

11. Procédé selon l'une quelconque des revendications précédentes, l'acquisition (S110) de données associées à une métrique de fonctionnement du robot de RPA pendant l'exécution d'un flux de travaux d'automatisation comportant l'acquisition de premières données associées à une première session au niveau d'une ressource d'exécution correspondant au flux de travaux d'automatisation, et le procédé comportant en outre :
l'acquisition de secondes données associées à une métrique de fonctionnement du robot de RPA pendant l'exécution du second flux de travaux d'automatisation, les secondes données étant associées à une seconde session au niveau de la ressource d'exécution ; et
la détermination d'une action d'optimisation d'après une seconde politique et les secondes données acquises.

12. Système (200) de gestion des performances d'un robot d'automatisation de processus robotique, RPA, le système comportant :
une unité (210) d'acquisition configurée pour acquérir des données associées à une métrique de fonctionnement du robot de RPA pendant l'exécution d'un flux de travaux d'automatisation ; et
une unité (220) de détermination configurée pour :
analyser les données acquises associées à la métrique de fonctionnement du robot de RPA pendant l'exécution du flux de travaux d'automatisation d'après une politique pour prédire ou déterminer une erreur ; et
déterminer une action d'optimisation d'après la politique et les résultats de l'analyse ;
l'action d'optimisation comportant une action automatique à réaliser par le robot de RPA correspondant aux résultats de l'analyse.

13. Système selon la revendication 12, le système (200) pouvant être fourni en tant que composant externe au flux de travaux d'automatisation.

14. Support de stockage lisible par ordinateur comportant des instructions qui, lorsqu'elles sont exécutées par un ordinateur, amènent l'ordinateur à réaliser les étapes du procédé selon l'une quelconque des revendications 1 à 11.
